# EUROPEAN PATENT SPECIFICATION

(11) **EP 2 515 730 B1**
(45) Date of publication and mention of the grant of the patent: **06.05.2015**
(21) Application number: 10839794.4
(22) Date of filing: 23.12.2010
(51) Int. Cl.: A47J 37/06, A47J 37/07

(54) **ELECTRIC ROAST COOKING DEVICE**
KOCHVORRICHTUNG MIT EINEM ELEKTRISCHEN ROST
DISPOSITIF DE RÔTISSOIRE ÉLECTRIQUE

(30) Priority: 23.12.2009 KR 20090016718 U
(43) Date of publication of application: 31.10.2012
(73) Proprietor: Hoammorea Co., Ltd., Seoul 153-775 (KR)
(72) Inventor: KIM, Gwi Yeong, Incheon 400-751 (KR); RIM, Sang Beom, Ansan-si Gyeonggi-do 426-813 (KR)
(74) Representative: Lempert, Jost
(86) International application number: PCT/KR2010/009260
(87) International publication number: WO 2011/078597

(56) References cited:
- GB-A- 2 014 417
- JP-A- 8 126 580
- JP-A- 10 192 140
- JP-A- 2007 143 804
- KR-B1- 100 648 005
- US-A1- 2002 066 723
- US-A1- 2004 131 344

## Description

The present invention relates to an electric roast cooking device according to the preamble of claim 1.

JP 2007143804 (A) discloses a heating cooker provided with cooking plates for mounting a cooking object such as meat, heating sheets disposed on the bottom sides of the cooking plates in a support case being a housing portion of the heating cooker. The heating sheets have conductor patterns of either ohmic material or printed polymer-based PTC material. The conductor patterns are clamped wired between a pair of insulating films and a power supply heating the heating sheets by energizing the conductor patterns is provided. Between the bottom of the cooking plates and the heating sheets an aluminium sheet is interposed. The whole cooking assembly as described above is provided and accordingly hold in the casing.

Accordingly the known structure of the heating cooker uses more material and particularly different materials as necessary.

Furtheron one of the representative foods among the Korean traditional foods is the Korean barbecue that is prepared by roasting meats such as pork or beef on a grill for roasting meats.

Gas burners using gas as fuels, burners using fossil fuels, and electric burners using electricity are used as cooking devices using a grill for roasting meats such as pork or beef.

A grill is put on top of a heating element and heated using heat generated from cooking devices, in order to make a grilled food by using the cooking equipment.

Accordingly, meats such as pork or beef that have been put on the grill are cooked through heat conduction of the grill.

In this case, vegetables such as garlic and mushrooms or Kimchi that is one of the Korean traditional foods are cooked on the grill together with the meats, to thereby double a taste of the meats.

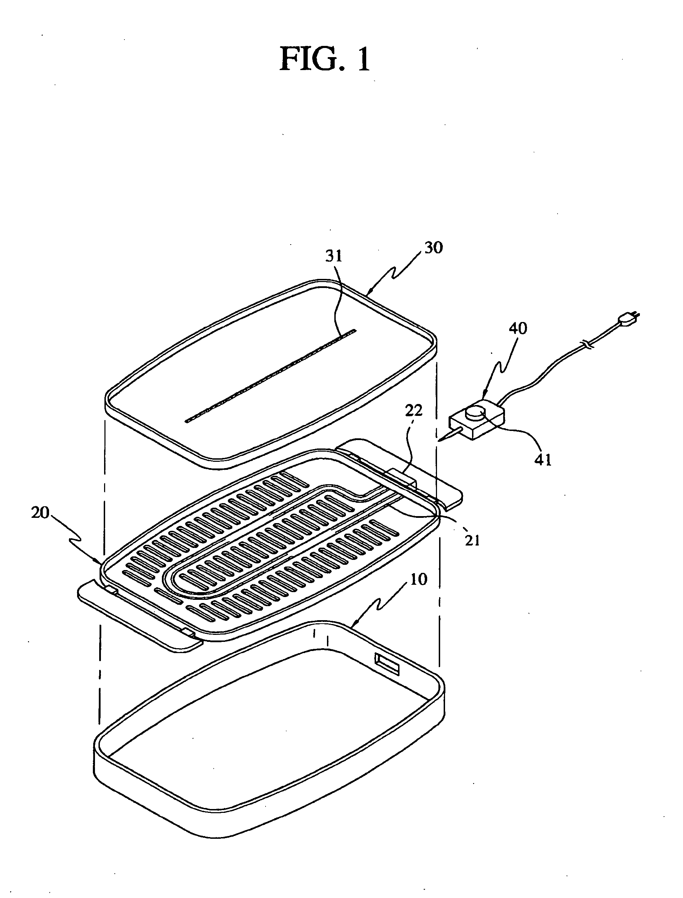

Meanwhile, among the above-described conventional cooking devices, an electric burner using electricity, that is, an electric roast cooking device will be described below, with reference to the accompanying drawing FIG. 1.

As shown in FIG. 1, a conventional roast cooking device includes a main body 10, an electric heating portion 20, a roasting tray 30 and a temperature controller 40.

The main body 10 is a portion in which various components are installed, and constitutes the lower portion of the roast cooking device.

The electric heating portion 20 heats the bottom of the roasting tray 30, to increase the temperature of the roasting tray 30, and is installed in the inside of the main body 10.

Here, a heat wire is installed as a heating element for thermal transfers in the electric heating portion 20, and is made of a nichrome wire 21.

Here, the nichrome wire 21 may be installed along the edge of the electric heating portion 20.

The roasting tray 30 is a portion on the upper portion of which cooking materials such as meats are placed and is disposed on the upper portion of the electric heating portion 20.

Here, an exit opening 31 is formed in the middle of the roasting tray 30 to drain oil discharged from meats.

The temperature controller 40 supplies the nichrome wire 21 with electric power, and plays a role of regulating a heating temperature of the nichrome wire 21.

In this case, one end of the temperature controller 40 is a connector 22 of the electric heating portion 20 and the other end thereof is formed of a plug type socket that may be connected to an external electric power source outlet. In this case, a dial 41 is installed on the temperature controller 40, in order to control the heating temperature of the nichrome wire 21.

Meanwhile, although it is not shown in the drawing, a bimetal sensor is installed between one end of the temperature controller 40 and the connector 22 of the electric heating portion 20 to thus play a role of detecting if the heating temperature is regulated.

Thus, when electric power is turned on for the electric heating portion 20 through the temperature controller 40 in the electric roast cooking device 40 having the above-described configuration, the nichrome wire 21 of the electric heating portion 20 is heated up to a temperature that has been set through the dial 41 of the temperature controller 40.

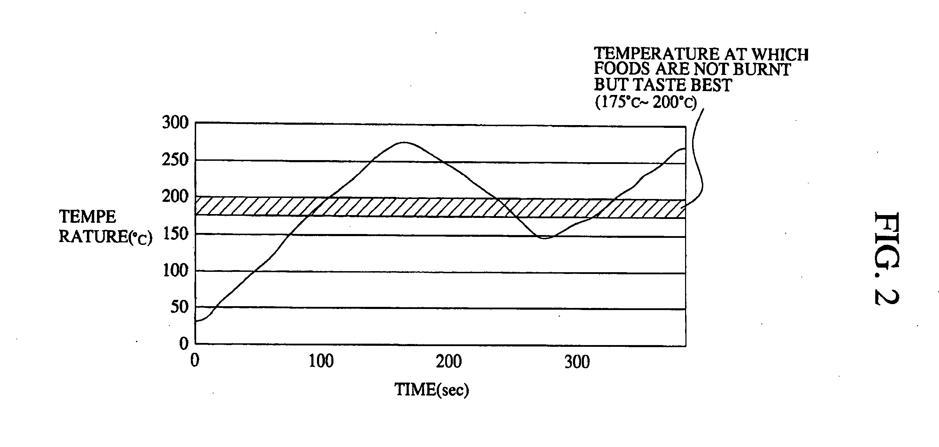

Thereafter, if the nichrome wire 21 reaches at a certain temperature or higher as shown in FIG. 2, the bimetal sensor detects that the nichrome wire 21 has reached at a certain temperature or higher, to then interrupt electric power that is supplied for the electric heating portion 20. Meanwhile, if the nichrome wire 21 falls below a certain temperature, electric power is supplied for the electric heating portion 20 by detection of the bimetallic sensor, to thus make the nichrome wire 21 electrically heated.

In other words, the conventional electrical roast cooking device repeats a series of the above processes several times in order to completely cook cooking materials. However, the conventional electric roast cooking device has the following problems.

Firstly, in order to prevent grilled foods from being burnt, temperature of the upper surface of the roasting tray 30 should be normally maintained at a range of 175[deg.C] to 200[deg.C] that is the optimized temperature region.

However, the conventional electric roast cooking device has caused a problem that temperature of the upper surface of the roasting tray 30 is not maintained at a range of 175[deg.C] to 200[deg.C], due to an error of the temperature controller 40 itself, an error of a position where the bimetal sensor is mounted, an error of a user who manipulates the dial 41, a temporal error according to energization and deenergization of the nichrome wire 21, and so on.

In other words, although the temperature control zone of the conventional temperature controller 40 is set to 200[deg.C] at the highest, it can be seen that temperature of the upper surface of the roasting tray 30 rises above 250[deg.C] actually as shown in FIG. 2.

Due to these errors, cooked foods are exposed to a range of carbonization temperatures. Accordingly, meats are frequently turned on the roasting tray 30 or temperature of the upper surface of the roasting tray 30 should be lowered, in order to prevent the cooked foods from being burnt.

In this case, processes of always checking status of the meats and flipping the meats are very cumbersome. In addition, lowering the temperature of the roasting tray 30 by adjusting the dial 41 of the temperature controller 40 tends to make the temperature of the nichrome wire 21 excessively lowered down to less than 140[deg.C] because a principle of shutting off electric power supply for the nichrome wire 21 of the electric heating portion 20 is used.

These changes in temperature have occurred until a piece of meat is completely cooked three times.

Accordingly, since the temperature of the roasting tray 30 is out of the optimal temperature range, taste and texture of the meat may be reduced.

Here, the temperature rise and temperature drop of the nichrome wire 21 can be seen from the graph of FIG. 2. Secondly, much electric power is consumed to thus cause a problem of weakening an economical efficiency.

In the case that the temperature of the roasting tray 30 is excessively elevated, the nichrome wire 21 is turned off using the temperature controller 40 in order to lower the temperature of the roasting tray 30.

Here, it is noted that a practical reason why the temperature of the nichrome wire 21 is lowered is not because the nichrome wire 21 itself performs the temperature regulation, but because electric power supply for the nichrome wire 21 is interrupted by manipulating the dial of the temperature controller 40.

Accordingly, in order to increase the temperature of the roasting tray 30 whose temperature has been lowered, electric power should be supplied again for the nichrome wire 21 for which the electric power has been interrupted. In this case, since the nichrome wire 21 is heated over the optimum temperature, electric power consumption may occur due to excessive heat and foods may be carbonized.

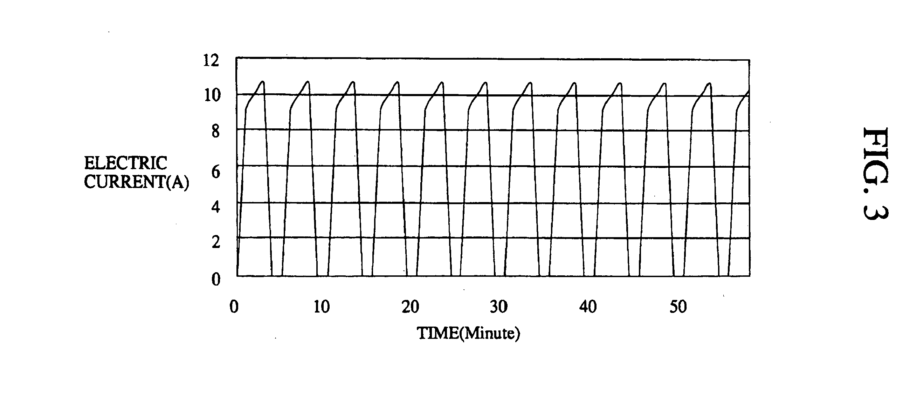

In other words, as shown in FIG. 3, a series of the above-described cooking processes are repeated during a cooking process and may thus cause a more amount of electric power consumption.

To solve the above problems of the conventional art, it is an object of the present invention to provide an electric roast cooking device that constantly maintains a surface temperature of a roasting tray at an optimal temperature, minimizes electric power consumption, and discriminates a cooked status of materials to be cooked on a single roasting tray, respectively.

To attain the above object, there is provided an electric roast cooking device comprising the characterizing features of claim 1.

Accordingly the present invention provides to an electric roast cooking device having a heating element made of a ceramic positive temperature coefficient (PTC) material to thereby prevent meats from being carbonized and save power consumption, and thus persistently maintain a temperature range suitable for roast cooking.

Here, preferably but not necessarily, the secession preventive piece comprises: a combiner that is screw-combined with the coupler; and a leaf spring that is extended from both sides of the combiner and elastically supports the ceramic PTC unit.

In addition, preferably but not necessarily, a plurality of the ceramic PTC units are provided, in which the electric power supply of each ceramic PTC unit is controlled by the electric power supply unit.

Here, preferably but not necessarily, the Curie temperatures of the respective ceramic PTC units are differently set.

An electric roast cooking device according to the present invention has the following effects.

Firstly, since at least one ceramic PTC unit is provided as a heating element, temperature of the upper surface of a roasting tray is maintained at the optimal temperature, to thus cook food materials properly without being burnt.

Accordingly, the present invention provides an effect of avoiding a burden of continuously caring about a cooking process for cooking foods.

Secondly, carbonization of foods and unnecessary power loss can be prevented in view of preservation of a fixed temperature in the ceramic PTC unit.

As a result, power consumption can be reduced to thus enhance an economic efficiency and increase customer satisfaction.

Thirdly, a plurality of ceramic PTC units whose Curie temperatures differ from each other are installed and then are electrically powered respectively. Accordingly, the roasting tray can be used partially, and a cooked status of materials to be cooked can be respectively discriminated on a single roasting tray.

As a result, the present invention provides an effect of cooking foods that are to be taste of several people at a time.

Furthermore, since only a portion of the roasting tray is selectively heated, a cooking range of the roasting tray can be selected depending on an amount of foods to be cooked.

Accordingly, the present invention provides an effect of reducing electric power consumption.

### Brief Description of Drawings

The above and other objects and advantages of the present invention will become more apparent by describing the preferred embodiment thereof in detail with reference to the accompanying drawings in which:
FIG. 1 is an explosive perspective view showing an electric roast cooking device according to the conventional technology;
FIG. 2 is a graphical view showing the temperature distribution of the electric roast cooking device according to the conventional technology;
FIG. 3 is a graphical view showing the distribution of the electric power consumption of the electric roast cooking device according to the conventional technology;
FIG. 4 is an explosive perspective view showing an electric roast cooking device according to a preferred embodiment of the present invention;
FIG. 5 is a bottom perspective view showing a roasting tray in an electric roast cooking device according to a preferred embodiment of the present invention;
FIG. 6 is a graphical view showing the temperature distribution of the electric roast cooking device according to a preferred embodiment of the present invention; and
FIG. 7 is a graphical view showing the distribution of the electric power consumption of the electric roast cooking device according to a preferred embodiment of the present invention.

### Best Mode for Carrying out the Invention

An electric roast cooking device according to the best mode of the present invention is configured as follows.

According to the best mode of the present invention, an electric roast cooking device comprises: an outer casing; a roasting tray that is installed on top of the outer casing in which cooking foods are put on the upper surface of the roasting tray and at least one fixing portion is formed at the bottom of the roasting tray; at least one ceramic PTC (Positive Temperature Coefficient) unit that is fixed to the fixing portion of the roasting tray and that supplies heat for the roasting tray; and an electric power supply unit that turns on/off the ceramic PTC unit.

Preferably but not necessarily, the ceramic PTC unit is formed of a rectangular shape along the lengthy direction of the roasting tray, and the fixing portion comprises: a pair of bulkheads that form a fixing groove corresponding to the ceramic PTC unit; a plurality of couplers that are formed along the lengthy direction of each bulkhead; and a plurality of secession preventive pieces that are respectively coupled with the couplers across the fixing groove of the bulkheads.

Preferably but not necessarily, the secession preventive piece comprises: a combiner that is screw-combined with the coupler; and a leaf spring that is extended from both sides of the combiner and elastically supports the ceramic PTC unit.

Preferably but not necessarily, a plurality of the ceramic PTC units are provided, in which the electric power supply of each ceramic PTC unit is controlled by the electric power supply unit.

Preferably but not necessarily, the Curie temperatures of the respective ceramic PTC units are differently set.

### Mode for the Invention

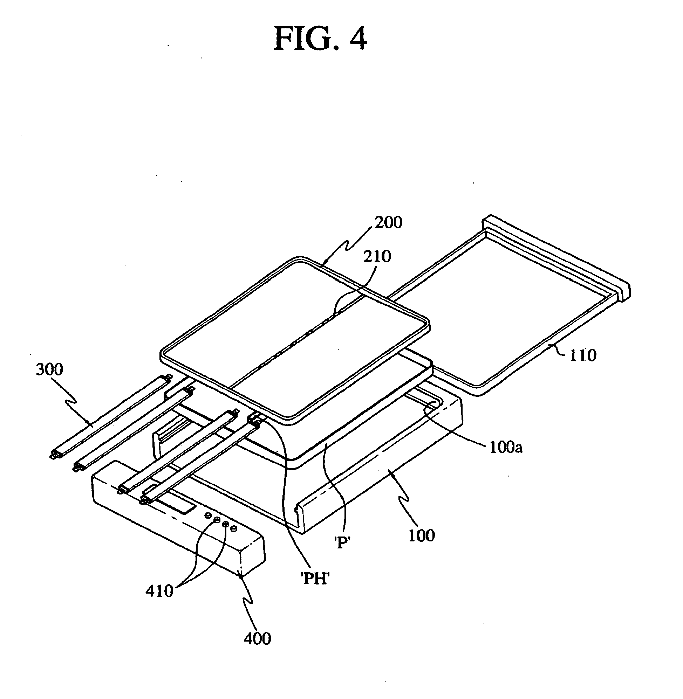

Hereinbelow, an electric roast cooking device according to a preferred embodiment of the present invention will be described with reference to the accompanying drawings, that is, FIGS. 4 to 7.

As shown in FIG 4, the electric roast cooking device includes an outer casing 100, a roasting tray 200, ceramic positive temperature coefficient (PTC) units 300 and an electric power supply unit 400.

The outer casing 100 constitutes a lower portion of the electric roast cooking device and the roasting tray 200 is provided on the upper portion of the outer casing 100.

Here, the form of the outer casing 100 is not limited to a particular shape, but is a rectangular shape as an example in order to help understanding of the present invention.

Here, it is desirable that an oil pan 110 is further installed in the outer casing 100.

The oil pan 110 plays a role of accommodating oil that is produced from meats and so on that are cooked on the roasting tray 200, and is preferably provided in the form of a drawer that enters into and exits from the inside of the outer casing 100.

To this end, an entrance opening 100a is formed in one side of the outer casing 100 in correspondence to the width of the oil pan 110.

In other words, the oil pan 110 having the form of a drawer goes in and out through the entrance opening 100a and accommodates debris such as oil falling from the roasting tray 200.

Next, the roasting tray 200 is provided so that cooking food materials can be seated on the upper surface of the roasting tray 200, and is placed on top of the outer casing 100.

In this case, the roasting tray 200 is preferably a rectangular shape corresponding to the outer casing 100. It is preferable that the roasting tray 200 is made of aluminum whose thermal conductivity is high, and is fabricated by a die casting method.

Here, it is desirable that an oil exit opening 210 is formed in the middle portion of the roasting tray 200 in the lengthy direction of the roasting tray 200, and the roasting tray 200 is inclined toward the oil exit opening 210.

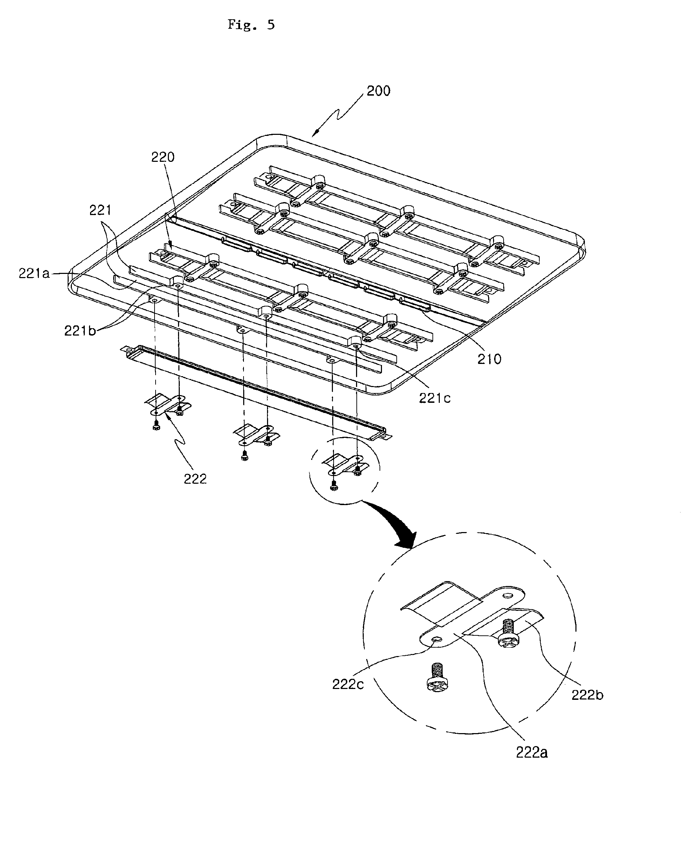

As shown in FIG. 5, at least one fixing portion 220 is formed on the bottom of the roasting tray 200. Here, at least one ceramic PTC unit to be described later is installed in the fixing portion 220.

A plurality of the fixing portions 220 are installed on the bottom of the roasting tray 200, so as to install a plurality of ceramic PTC units 300 therein, and each fixing portion 220 includes bulkheads 221 and secession preventive pieces 222.

A pair of the bulkheads 221 are provided facing each other, and are formed along the lengthy direction of the roasting tray 200.

The reason why a pair of the bulkheads 221 are provided facing each other, and are formed along the lengthy direction of the roasting tray 200 is because the bulkheads 221 should be configured to correspond to the form of the ceramic PTC units 330. A fixing groove 221a is formed between the bulkheads 221 in which a ceramic PTC unit 300 is disposed in the fixing groove 221a.

Meanwhile, a plurality of couplers 221b are formed in the lengthy direction in each bulkhead 221.

A plurality of secession preventive pieces 222 are coupled with each coupler 221b and are formed in the outer lateral direction of each bulkhead 221.

Here, a screw hole 221c is formed in each coupler 221b with which a screw is coupled.

In addition, a pair of the couplers 221b are provided in opposition each other between a pair of the bulkheads 221.

A plurality of pairs of the couplers 221b are formed along a pair of the bulkheads 221.

Meanwhile, the secession preventive piece 222 plays a role of supporting the ceramic PTC unit 300 that is disposed in the fixing groove 221 formed between the bulkheads 221, and is coupled with the couplers 221b that are arranged at both sides of the bulkheads 221 across the fixing groove 221 formed between the bulkheads 221.

Here, the secession preventive piece 222 includes: a combiner 222a that is combined with the coupler 221 b across the fixing groove 221 formed between the bulkheads 221; and a leaf spring 222b that is extended from both sides of the combiner 222a and elastically supports the ceramic PTC unit 300.

In this case, coupling holes 222c are respectively formed at both ends of the combiner 222a in correspondence to the screw holes 221c of the couplers 221b.

In addition, the leaf spring 222b plays a role of widening a supporting area of the secession preventive piece 222 with respect to the ceramic PTC unit 300, to thus efficiently support the ceramic PTC unit 300.

In addition, the leaf spring 222b plays a role of making the ceramic PTC unit 300 closely adhered on the bottom of the roasting tray 200 by using an elastic force, to thereby maximize thermal conductivity of the ceramic PTC unit 300.

Here, as shown in FIG. 5, it is preferable that the leaf spring 222b is bent so as to push the ceramic PTC unit 300 to thus make the ceramic PTC unit 300 closely adhered on the bottom of the roasting tray 200.

In addition, the leaf spring 222b is contracted and expanded along the ceramic PTC unit 300 at the time of thermal expansion of the ceramic PTC unit 300, to thereby make the ceramic PTC unit 300 smoothly thermally expanded.

If the ceramic PTC unit 300 is not smoothly thermally expanded, noise may occur due to friction between the secession preventive piece 222 and the ceramic PTC unit 300.

Here, the ceramic PTC unit 300 is a heating element that heats the roasting tray 200, and is installed in the fixing portion 220 formed at the bottom of the roasting tray 200.

The ceramic PTC unit 300 is a thermistor having a positive temperature coefficient and has a characteristic that resistance changes as temperature changes.

If temperature is less than the Curie temperature, the resistance value of the ceramic PTC unit 300 decreases slowly depending upon the temperature, but if temperature is not less than the Curie temperature, the resistance value of the ceramic PTC unit 300 increases rapidly.

Meanwhile, the ceramic PTC unit 300 is preferably in the form of a bar of a rectangular shape.

The reason why the ceramic PTC unit 300 is preferably in the form of a bar of a rectangular shape is because heat is uniformly conveyed over the lengthy direction of the roasting tray 200.

Here, a plurality of the ceramic PTC units 300 are respectively provided in a plurality of the fixing portions 220.

The reason why a plurality of the ceramic PTC units 300 are respectively provided in a plurality of the fixing portions 220 is because only a particular portion of the roasting tray 200 can be used in the case that the plurality of the ceramic PTC units 300 have been provided in the plurality of the fixing portions 220 to then be respectively controlled.

In other words, in the case that there are not much amount of cooking materials, only half the roasting tray 200 can be used in order to reduce electric power loss. For example, in the case that ceramic PTC units 300 are installed at both sides of the oil exit opening 210 on the bottom of the roasting tray 200, a cooking area of the roasting tray 200 can be selectively used.

In this case, the ceramic PTC units 300 that are respectively installed at both sides of the oil exit opening 210 are provided to have the respectively different Curie temperatures.

In other words, if the Curie temperature of the ceramic PTC unit 300 that is installed at one side of the oil exit opening 210 is heightened to increase a heating temperature of the roasting tray 200 up to a relatively high temperature, meats can be completely well done, but if the Curie temperature of the ceramic PTC unit 300 that is installed at the other side of the oil exit opening 210 is lowered to decrease the heating temperature of the roasting tray 200 down to a relatively low temperature, meats can be properly done.

Accordingly, the meats can be differently cooked through a cooking process, all at a time, and thus the meats can be differently cooked according to a variety of tastes of users.

Here, it is desirable that a difference in temperature of the ceramic PTC units is about 10°C but is not limited thereto.

Meanwhile, it is preferable that four ceramic PTC units 300 are provided and two ceramic PTC units 300 are installed at either side of the oil exit opening 210.

Of course, the number of the ceramic PTC units 300 is not limited, and can be selectively designed depending on the size of the electric roast cooking device.

Meanwhile, it is preferable that a protective panel 'P' is installed between the roasting tray 200 and the outer casing 100.

The protective panel 'P' is installed on the bottom surface of the roasting tray 200 and plays a role of preventing thermal energy produced from the ceramic PTC units 300 from leaking out to thus avoid a loss of energy.

The protective panel 'P' shields the ceramic PTC units 300. A penetration hole 'PH' corresponding to the oil exit opening 210 of the roasting tray 200 is formed in the middle of the protective panel 'P'.

Next, the electric power supply unit 400 plays a role of applying electric power to the ceramic PTC units 300 and is installed on one side of the outer casing 100.

The electric power supply unit 400 does not directly control the temperatures of the ceramic PTC units 300, but plays a role of turning on/off the ceramic PTC units 300 simply.

Accordingly, the electric roast cooking device according to the present invention has no need to have a temperature controller that is applied to the existing product, and does not cause a temperature regulation error or a user manipulation error.

In this case, electric power switch buttons 410 are installed in the electric power supply unit 400 and the switch buttons 410 are connected to the ceramic PTC units 300, respectively.

In other words, the number of the switch buttons 410 is identical to the number of the ceramic PTC units 300.

Hereinbelow, an arrangement and function of the electric roast cooking device having the above-described configuration according to the present invention will be described.

The ceramic PTC units 300 are respectively coupled into the fixing portion 220 formed on the bottom of the roasting tray 200.

Here, each ceramic PTC unit 300 is disposed into the fixing groove 221a formed between the bulkheads 221 and each secession preventive piece 222 is screw-coupled with the couplers 221b.

Here, the leaf spring 222b of the secession preventive piece 222 pushes the roasting tray 200 to then make the ceramic PTC unit 300 closely adhered to the bottom of the roasting tray 200.

Then, terminals of the respective ceramic PTC units 300 are connected to the respective switch buttons 410 of the electric power supply unit 400.

Meanwhile, the oil pan 110 is entered into and existed from the outer casing 100 through the entrance opening 100a, and is placed in the inside of the outer casing 100.

In addition, the protective panel 'P' is installed on top of the oil pan 110, and the roasting tray 200 is installed on top of the oil pan 110, to accordingly completely assemble the electric roast cooking device.

In use, meats are put on the upper surface of the roasting tray 200 of the combined electric roast cooking device.

After having put the meats on the roasting tray 200, the switch buttons 410 of the electric power supply unit 400 are manipulated to thus apply the electric power to the ceramic PTC units 300.

In this case, each switch button 410 is connected to each ceramic PTC unit 300, and thus a heating range of the roasting tray 200 can be determined depending on user's choice.

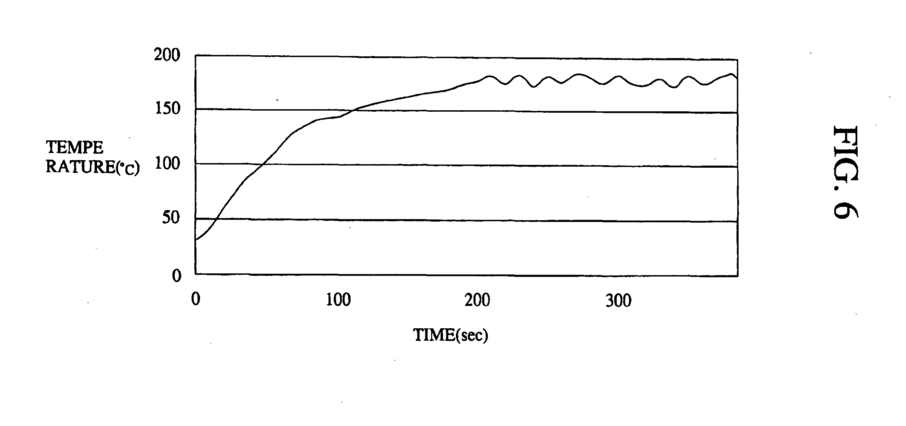

Here, as shown in FIG. 6, a heating temperature of each ceramic PTC unit 300 rises up from an initial temperature as time passes, and then the heating temperature of each ceramic PTC unit 300 rises up and down actively within a range of the Curie temperatures 175°C to 200°C that is the optimal temperature range for roasting the meats, to then maintain an optimal condition.

In other words, as it can be seen from the graph shown in FIG. 6, each ceramic PTC unit 300 varies in a value of resistance depending on the temperature to then maintain a fixed temperature and thus exhibits a sudden temperature difference.

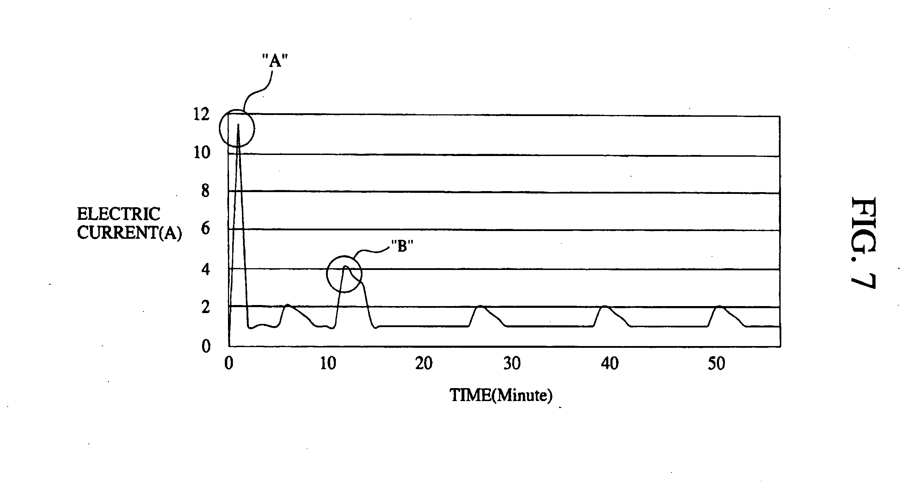

Here, as each ceramic PTC unit 300 maintains a fixed temperature as described above, distribution of electric power to be consumed will be described below with reference to FIG. 7.

In the initial condition, it can be seen from an area "A" of FIG. 7 that an amount of electric current increases in order to make the ceramic PTC unit 300 heated.

Thereafter, the amount of electric current decreases gradually, and after about 5 minutes elapses, it can be seen that constant electric current is consumed, and the heating temperature of the ceramic PTC unit 300 can be maintained.

Here, the reason why an amount of electric current increases in an area "B" of FIG. 7 is because the meat is turned or flipped to thus increase an amount of instantaneous electric current due to a temperature difference between the raw surface of the meat and the upper surface of the roasting tray 200.

Here, as can be seen from the graph of FIG. 7, the temperature of the roasting tray is not controlled or regulated by energization or deenergization of the electric power supply unit, but the heating element itself is actively heated depending on the temperature situation. As a result, only necessary electric power is consumed to thus avoid unnecessary waste of electric power consumption and also save an amount of electric power consumption.

Meanwhile, the present invention is not limited to the above-described embodiment, and it is possible for one who has an ordinary skill in the art to modify or change all the electric roast cooking devices for cooking foods in various forms, within the scope of the invention as defined by the appended claims.

### Industrial Applicability

The electric roast cooking device according to the present invention uses ceramic PTC units 300 that are heating elements and are provided to be heated up to less than a temperature appropriate for a roasted food, to thereby prevent grilled meats from being carbonized and thus discriminate a cooked status of materials to be cooked on a single roasting tray, respectively.

Furthermore, an amount of electric power consumption is reduced to thus enhance an economic efficiency.

Accordingly, the electric roast cooking device according to the present invention can be used industries for homes as well as restaurants.

## Claims

1. An electric roast cooking device comprising:
an outer casing (100), an electric power supply unit (400), a roasting tray (200) that is installed on top of the outer casing (100) in which cooking foods are put on the upper surface of the roasting tray (30),
**characterized in that**
- at least one fixing portion (220) is formed at the bottom of the roasting tray (200),
- at least one ceramic PTC unit (300) is fixed to the fixing portion of the roasting tray (200) and supplies heat for the roasting tray (200),
- the electric power supply unit (400) turns on/off the ceramic PTC unit (300),
- the ceramic PTC unit (300) is formed of a rectangular shape along the lengthy direction of the roasting tray (200) and
- the fixing portion (220) comprises:
-- a pair of bulkheads (221) that form a fixing groove corresponding to the ceramic PTC unit (300),
-- a plurality of couplers that are formed along the lengthy direction of each bulkhead (221) and
-- a plurality of secession preventive pieces (222) that are respectively coupled with the couplers (221b) across the fixing groove (221a) of the bulkheads (221).

2. The electric roast cooking device according to claim 1, wherein the secession preventive piece (222) comprises: a combiner that is screw-combined with the coupler (221b); and a leaf spring that is extended from both sides of the combiner and elastically supports the ceramic PTC unit (300).

3. The electric roast cooking device according to claim 1 or 2, wherein a plurality of the ceramic PTC units (300) are provided, in which the electric power supply (400) of each ceramic PTC unit (300) is controlled by the electric power supply unit (400).

4. The electric roast cooking device according to claim 3, wherein the Curie temperatures of the respective ceramic PTC units (300) are differently set.

## Patentansprüche

1. Elektrische Brat- und Kochvorrichtung mit:
einem Gehäuse (100), einer Stromversorgungseinheit (400), einem Bratblech (200), welches oberhalb des Gehäuses (100) befestigt ist und auf welchem zuzubereitende Lebensmittel auf der Oberfläche des Bratbleches (200) gelegt werden,
**dadurch gekennzeichnet, dass**
- mindestens einen Befestigungsabschnitt (220) auf der Unterseite des Bratblechs (200) vorgesehen ist,
- mindestens eine PTC-Einheit aus Keramik (300) an dem Befestigungsabschnitt (220) des Bratblechs (200) befestigt ist und das Bratblech (200) beheizt,
- die Stromversorgungseinheit (400) die PTC-Einheit aus Keramik (300) an- und ausschaltet,
- die PTC-Einheit aus Keramik (300) sich entlang der Längsachse des Bratblechs (200) erstreckt und
- der Befestigungsabschnitt (220) folgende Komponenten aufweist:
-- paarweise ausgestaltete Schotten (221), die als Befestigungsrille (221a) für die PTC-Einheit aus Keramik (300) vorgesehen sind,
-- eine Vielzahl an Kupplungen, welche entlang der Längsachse jedes Schotts (221) angebracht sind und
-- eine Vielzahl von Befestigungsvorrichtungen (222), welche an den Kupplungen (221b) entlang der Befestigungsrille (221a) der Schotten (221) angebracht sind.

2. Elektrische Brat- und Kochvorrichtung nach Anspruch 1, **dadurch gekennzeichnet, dass** die Befestigungsvorrichtung (222) folgende Komponenten aufweist: Ein Verknüpfungselement welches an der Kupplung (221b) befestigt ist; und eine Blattfeder, welche sich nach beiden Seiten des Verknüpfungselement erstreckt und die PTC-Einheit aus Keramik (300) haltert.

3. Elektrische Brat- und Kochvorrichtung nach einem der Ansprüche 1 oder 2, **dadurch gekennzeichnet, dass** eine Vielzahl an PTC-Einheiten aus Keramik (300) vorgesehen ist, bei denen die Stromversorgung (400) jeder einzelnen PTC-Einheit aus Keramik (300) durch die Stromversorgungseinheit (400) gesteuert wird.

4. Elektrische Bratvorrichtung nach Anspruch 3, **dadurch gekennzeichnet, dass** die Curie-Temperaturen der jeweiligen PTC-Einheiten aus Keramik (300) unterschiedlich eingestellt wird.

## Revendications

1. Dispositif de rôtissoire électrique comprenant :
un carter extérieur (100), une unité d'alimentation électrique (400), un plateau de rôtissage (200) installé sur le carter extérieur (100) dans lequel des aliments à cuire sont placés sur la surface supérieure du plateau de rôtissage (200) ;
**caractérisé en ce que** :
- au moins une partie de fixation (220) est formée sur le fond du plateau de rôtissage (200) ;
- au moins une unité PTC en céramique (300) est fixée à la partie de fixation du plateau de rôtissage (200) et amène de la chaleur au plateau de rôtissage (200) ;
- l'unité d'alimentation électrique (400) allume/éteint l'unité PTC en céramique (300) ;
- l'unité PTC en céramique (300) prend une forme rectangulaire le long de la direction longitudinale du plateau de rôtissage (200) ; et
- la partie de fixation (220) comprend :
- une paire de têtes de four (221) formant une rainure de fixation correspondant à l'unité PTC en céramique (300) ;
- une pluralité de systèmes de couplage formés le long de la direction longitudinale de chaque tête de four (221) ; et
- une pluralité d'éléments antirupture (222) respectivement couplés aux systèmes de couplage (221 b) à travers la rainure de fixation (221 a) des têtes de four (221).

2. Dispositif de rôtissoire électrique selon la revendication 1, dans lequel l'élément antirupture (222) comprend : un élément combinant combiné par vis au système de couplage (221 b) ; et un ressort à lames déployé en partant des deux côtés de l'élément combinant et soutenant de façon élastique l'unité PTC en céramique (300).

3. Dispositif de rôtissoire électrique selon la revendication 1 ou 2, dans lequel une pluralité d'unités PTC en céramique (300) sont prévues, l'alimentation électrique (400) de chaque unité PTC en céramique (300) étant commandée par l'unité d'alimentation électrique (400).

4. Dispositif de rôtissoire électrique selon la revendication 3, dans lequel les températures de Curie des unités PTC en céramique (300) respectives sont réglées différemment.
